# EUROPEAN PATENT SPECIFICATION

(11) **EP 3 219 585 B1**
(45) Date of publication and mention of the grant of the patent: **24.04.2019**
(21) Application number: 16002395.8
(22) Date of filing: 28.10.2016
(51) Int. Cl.: B62D 21/20, B62D 21/02

(54) **A CHASSIS FOR A TRAILER**
CHASSIS FÜR EINEN ANHÄNGER
CHÂSSIS DE REMORQUE

(30) Priority: 28.10.2015 GB 201519051
(43) Date of publication of application: 20.09.2017
(73) Proprietor: SDC Trailers Limited, Toomebridge, Antrim BT41 3 SS (GB)
(72) Inventor: GRIBBEN, Peter, Toomebridge, Antrim BT41 3SS (GB)
(74) Representative: Hanna, John Philip

(56) References cited:
- CN-U- 202 863 554
- DE-U1-202011 000 731
- DE-U1-202012 102 786
- US-A- 5 335 932
- US-A1- 2005 161 896
- US-A1- 2006 255 557
- US-A1- 2015 130 164
- US-B1- 6 439 588

## Description

The present invention relates to a chassis for a vehicle and in particular to a chassis for a vehicle for reinforcement.

The chassis, undercarriage, and/or trailer beds of large transport vehicles are generally required to carry large loads and the constituent members of such structures are as a result required to handle significant levels of stress as a result of these loads. Some areas of such structures are more susceptible to failure as a result of these stresses due to the concentration of stress at or around particular features. One such feature which experiences increased levels of stress, and hence increased risk of failure, is the web portion and the flange of any beam which interacts with the torsion box or any other load transferring type element of a trailer structure. The torsional forces counteracted by the torsion box are transferred from the torsion box into the web of an adjoining beam and the box attachment at this location transfers high force and stress. This causes deformation of the web and can result in structural failure of the beam or part thereof.

It is known in general that stiffening features can be utilized on the web portions which adjoin the torsion box or the like to stiffen these web portions and reduce the likelihood of failure. However, such stiffening features have typically taken the form of stiffening gussets which attach to both the bottom and the top beam flanges of the beam and as a result interfere with other elements that may be required at the top portion of the beam such as floor cross members. Moreover, in certain instances, stiffening gussets may make the process of painting the structure more difficult should they impede access to internal areas of the structure. Simply reducing the height of these gusset type stiffening members to avoid encroachment on the upper portion of a beam would not typically result in enough additional stiffness to counteract the forces experienced by a torsion box or suspension hanger. Document US2006255557 shows a chassis frame assembly for a trailer with the features of the characterizing portion of claim 1.

It is an object of the present invention to obviate or mitigate the problem of providing a web stiffening member which is capable of counteracting forces transferred by a torsion box on a beam whilst being configured to ensure ease of access and placement of other structural features.

Accordingly, the present invention provides a chassis for a trailer comprising two spaced apart elongate structural support beams spanning all or a substantial part of the length of the trailer, the two elongate structural support beams being mechanically coupled by spaced apart torsion boxes spanning between the elongate structural support beams along the length of the elongate structural support beams, the torsion boxes being configured to transfer load to the elongate structural support beams, the mechanical coupling joint between the torsion boxes and a web of the elongate structural support beams being reinforced by a wing gusset surrounding the mechanical coupling joint, the chassis further comprising a reinforcing means configured to reinforce the web of the elongate structural support beams of the chassis of the trailer, the reinforcing means being located on a mutually opposing portion of the web of the elongate structural support beams in engagement with the torsion boxes, wherein the reinforcing means extends less than the full heightwise distance between the bottom and the top of the elongate structural support beam characterized in that the reinforcing means comprises at least two upright web attachment portions.

Ideally, the reinforcing means is on an outside surface of the elongate structural support beam, the torsion box and wing gusset are on an inside surface of the elongate structural support beam. By inside we mean facing towards the center of the trailer and by outside we mean facing away from the trailer.

Ideally, the reinforcing means extends from a bottom flange member of the elongate structural support beam towards but not into contact with the upper flange member of the elongate structural support beam.

Preferably, the reinforcing means extends from an upper flange member of the elongate structural support beam towards but not into contact with a bottom flange member of the elongate structural support beam.

Advantageously, as the reinforcing means do not extend the full heightwise distance between the bottom and the top of the elongate structural support beam, the remaining space can have additional structural components integrated therewith leaving this remaining space accessible for painting or other such finishing treatments that may be required.

Preferably, the reinforcing means being formed such that it has a thickness which is significantly less than its lateral and longitudinal dimensions.

Ideally, the elongate structural support beams comprises upper and lower flanges joined by a web portion.

Preferably, the elongate structural support beams are provided by any configuration of elongate structural support beam capable of providing sufficient structural integrity to perform the function of the elongate structural support beam.

In one embodiment, the elongate structural support beams are I-Section beams, although it will be appreciated that any beam with sufficient structural integrity such as H, L, C section beams are also suitable for use with the present invention.

Ideally, the reinforcing means is attachable to the web of the elongate structural support beam such that the portion of the reinforcing means defining the thickness dimension is abutting the web of the elongate structural support beam.

Preferably, the reinforcing means is attachable to a flange of the elongate structural support beam such that the portion of the reinforcing means defining the thickness dimension is abutting the flange of the elongate structural support beam.

Advantageously, the reinforcing means provides sufficient reinforcement of the web and/or flange of the beam whilst allowing installation space between the reinforcing means and the top or bottom flange of the elongate structural support beams so that other structural components may be installed.

Further advantageously, as the reinforcing means is attachable to the web and/or flange of the elongate structural support beams along its thickness, a minimal section of the web and/or flange of the elongate structural support beams is covered by the reinforcing means providing better access for painting, coating, treating, or any other activity which would benefit from greater access to a larger portion of the elongate structural support beams.

Preferably, the upright web attachment portions extend from one flange of the elongate structural support beams towards but not into contact with the other flange of the elongate structural support beams.

Ideally, the reinforcing means extends less than 70% of the full heightwise distance between the bottom and the top of the elongate structural support beams.

Ideally, the reinforcing means extends less than 60% of the full heightwise distance between the bottom and the top of the elongate structural support beams.

Ideally, the reinforcing means extends less than 50% of the full heightwise distance between the bottom and the top of the elongate structural support beams.

Ideally, the reinforcing means extends less than 40% of the full heightwise distance between the bottom and the top of the elongate structural support beams.

Ideally, the reinforcing means extends less than 30% of the full heightwise distance between the bottom and the top of the elongate structural support beams.

Ideally, the reinforcing means extends less than 20% of the full heightwise distance between the bottom and the top of the elongate structural support beams.

Ideally, the reinforcing means extends from the lower flange of the elongate structural support beams less than 70% of the distance towards the uppermost portion of the elongate structural support beams.

Ideally, the reinforcing means extends from the lower flange of the elongate structural support beams less than 60% of the distance towards the uppermost portion of the elongate structural support beams.

Ideally, the reinforcing means extends from the lower flange of the elongate structural support beams less than 50% of the distance towards the uppermost portion of the elongate structural support beams.

Ideally, the reinforcing means extends from the lower flange of the elongate structural support beams less than 40% of the distance towards the uppermost portion of the elongate structural support beams.

Ideally, the reinforcing means extends from the lower flange of the elongate structural support beams less than 30% of the distance towards the uppermost portion of the elongate structural support beams.

Ideally, the reinforcing means extends from the lower flange of the elongate structural support beams less than 20% of the distance towards the uppermost portion of the elongate structural support beams.

Preferably, the reinforcing means is adjustable such that it extends a portion of the heightwise distance between the bottom and the top flanges of the elongate structural support beam, this portion being determined by the characteristics of the trailer chassis or reinforcement requirements thereof.

Ideally, the height of the reinforcing is approximately equal to or greater than the height of the torsion box.

Preferably, the reinforcing means extends from one flange of the elongate structural support beam towards the other flange of the elongate structural support beam a distance allowing the placement of a torsion box on the web of the elongate structural support beam between the reinforcing means and a flange of the elongate structural support beam. Advantageously, this makes the optimization of the structural support features of the chassis a lot easier as the positioning of torsion boxes is in no way limited by the reinforcing means spanning the full height of the web of the elongate structural support beam.

Advantageously, as all of the current structural load bearing analysis and stress analysis of chassis for road going vehicles is done by virtual simulation and it is essential not to be limited to having portions along the length of the main beams which are inaccessible for further enhancing of the overall structural integrity of the chassis, this present invention ensures that the full length of the elongate structural support beams are available as locations for enhancing structural integrity.

Ideally, the crossbeam is a floor crossbeam.

Ideally, the two upright web attachment portions are attachable to the lower flange of the beam.

Ideally, the reinforcing means comprises at least one further web attachment portion extending between the two upright web attachment portions.

Advantageously, the at least one further web attachment portion provides additional stiffness to the reinforcing means such that attachment to the upper or lower flange of the beam is not necessary, as is the case for many methods for reinforcing the web of a beam.

Preferably, the reinforcing means is a generally inverted U-shaped or C-shaped reinforcing means.

Ideally, the generally inverted U-shaped or C-shaped reinforcing means has a flattened top portion formed by the further web attachment portion.

Preferably, the two upright web attachment portions extend substantially parallel to one another.

Ideally, the at least one further web attachment portion extends between the two upright web attachment portions and substantially perpendicular to the two upright web attachment portions.

Preferably, the lower ends of the upright web attachment portions form free ends which are attachable to the lower or upper flange of the elongate structural support beam.

Ideally, the ends of the upright web attachment portions distal the ends attachable to the flange of the elongate structural support beam are attachable or formed integrally with the at least one further web attachment portion.

Preferably, a radius is provided between upright web attachment portion and the further web attachment portion.

Ideally, the reinforcing means is formed from a flat plate.

Preferably, the thickness dimension of the reinforcing means is defined by the thickness of the flat plate used to form the reinforcing means.

Preferably, the reinforcing means is formed from a single piece of material bent or otherwise formed into the shape of the reinforcing means.

Ideally, the reinforcing means is attached to the lower flange portion and/or the web of the beam by welding, adhesive, mechanical fixings, or any other such bonding or attachment means suitable.

Preferably, the reinforcing means is locatable such that it supports and/or reinforces and/or stiffens the web and/or flange of the beam at or about the location of a torsion box and wing gusset on the web and/or flange of the beam.

Ideally, the reinforcing means is locatable on the opposing planar surface of the web of the beam from that which is in contact with the torsion box.

Preferably, the shape of the reinforcing means is substantially similar to at least a portion of the cross-sectional shape of the torsion box.

Ideally, the transport vehicle is a trailer.

Preferably, one or both elongate structural support beams have a plurality of reinforcing means locatable along their lengths at each position of a torsion box.

Ideally, the reinforcing means is manufactured from a metal or metal alloy.

Preferably, the reinforcing means is manufactured from steel.

Accordingly, the present invention provides a trailer bed having a chassis comprising two spaced apart elongate structural support beams spanning all or a substantial part of the length of the trailer, the two elongate structural support beams being mechanically coupled by torsion boxes spaced apart spanning between the elongate structural support beams along the length of the elongate structural support beams, the torsion boxes being configured to transfer load to the elongate structural support beams, the mechanical coupling joint between the torsion boxes and a web of the elongate structural support beams being reinforced by wing gussets surrounding the mechanical coupling joint, the chassis further comprising a reinforcing means configured to reinforce the web of the elongate structural support beams of the chassis of the trailer, the reinforcing means being located on a mutually opposing portion of the web of the elongate structural support beams in engagement with the torsion boxes, wherein the reinforcing means extends less than the full heightwise distance between the bottom and the top of the elongate structural support beam.

Accordingly, the present invention provides an undercarriage for a road going vehicle having a chassis comprising two spaced apart elongate structural support beams spanning all or a substantial part of the length of the trailer, the two elongate structural support beams being mechanically coupled by torsion boxes spaced apart spanning between the elongate structural support beams along the length of the elongate structural support beams, the torsion boxes being configured to transfer load to the elongate structural support beams, the mechanical coupling joint between the torsion boxes and a web of the elongate structural support beams being reinforced by wing gussets surrounding the mechanical coupling joint, the chassis further comprising a reinforcing means configured to reinforce the web of the elongate structural support beams of the chassis of the trailer, the reinforcing means being located on a mutually opposing portion of the web of the elongate structural support beams in engagement with the cross beam, wherein the reinforcing means extends less than the full heightwise distance between the bottom and the top of the elongate structural support beam.

Accordingly, the present invention provides a method of manufacturing a chassis for a trailer comprising the steps of providing two main chassis elongate structural support beams, coupling the two main elongate structural support beams with torsion boxes and reinforcing the joint therebetween with wing gussets, reinforcing the main chassis elongate structural support beams on an opposing surface of the elongate structural support beams to which the torsion box is attached by providing a reinforcing means along less than the full height of the elongate structural support beams the method being characterized by providing the reinforcing means with at least two upright web attachment portions..

Advantageously, as the reinforcing means do not extend the full height of the elongate structural support beam, the remaining gap can have additional structural components integrated therewith and makes this area accessible for painting or other such finishing treatments that may be required.

Ideally, the method further comprising forming reinforcing means by cutting, stamping, or otherwise forming a blank of material from a sheet or plate.

Preferably, the method further comprising bending the blank of material into the shape of the reinforcing means such that the reinforcing means is shaped and/or sized so as to extend along less than the full height of the elongate structural support beams.

Ideally the method further comprising bending the material blank in two locations such that two upright portions are formed, joined by a further web attachment portion therebetween, the overall height of the reinforcing means formed being such that it extends along less than the full height of the elongate structural support beams.

Ideally, the method comprising bending the material blank in two locations so that the two upright portions extend away from the further web attachment portion in the same general direction.

Preferably, the method comprising bending the material blank in two locations through 90 degrees such that the two upright portions extend perpendicular to the further web attachment portion.

Preferably, the method comprising welding, mechanically attaching, or adhesively bonding the reinforcing means to the web of the elongate structural support beams on an outside surface of the web of the elongate structural support beams and opposing the torsion box and wing gusset(s) such that the reinforcing means extends along less than the full height of the elongate structural support beams.

Preferably, the method comprising welding, mechanically attaching, or adhesively bonding the reinforcing means to a flange of the elongate structural support beam on the surface of the flange which faces the web of the elongate structural support beam .

Further advantageously, as the reinforcing means does not encroach on the space utilised for additional structural components, manufacture and assembly of the chassis is made easier by the increased level of access available and the ability to place additional structural components without having to first consider the placement of reinforcing means.

The skilled man will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The invention will now be described with reference to the accompanying drawings which show by way of example only one embodiment of an apparatus in accordance with the invention. In the drawings:

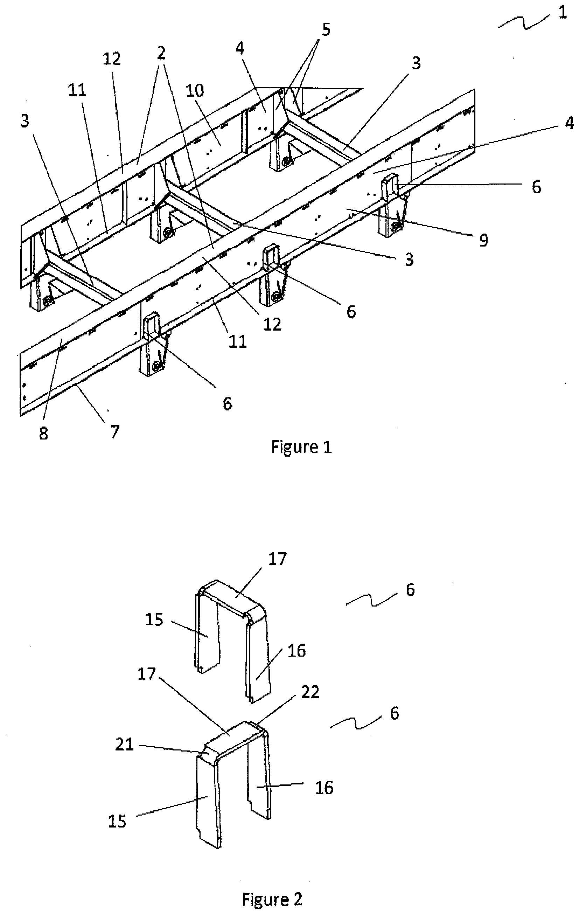

Figure 1 is a perspective view of a portion of a chassis according to the invention showing a plurality of reinforcing means;
Figure 2 is a perspective view of a reinforcing means;
Figure 3 is a front and top view of a reinforcing means;
Figure 4 is a side view of a reinforcing means;
Figure 5 is a top plan view of the blank for the reinforcing member prior to bending;

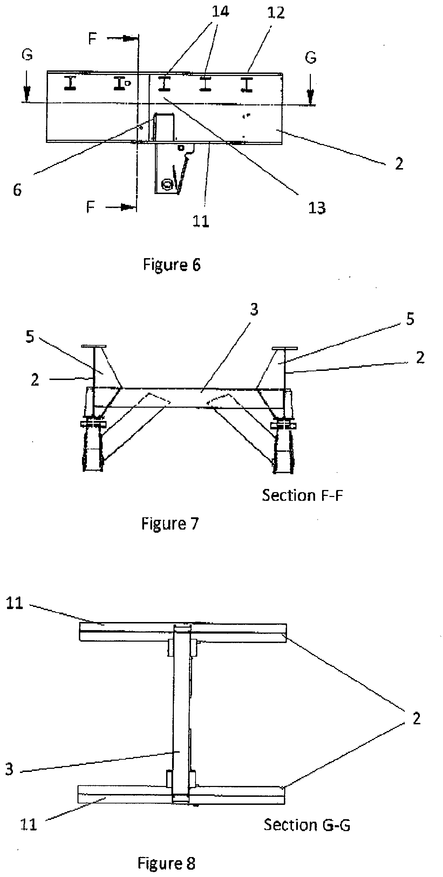

Figure 6 is a side view of a portion of a chassis according to the invention;
Figure 7 is a sectional view of a chassis according to the invention along section F-F of figure 6;
Figure 8 is a sectional view of a chassis according to the invention along section G-G of figure 6; and

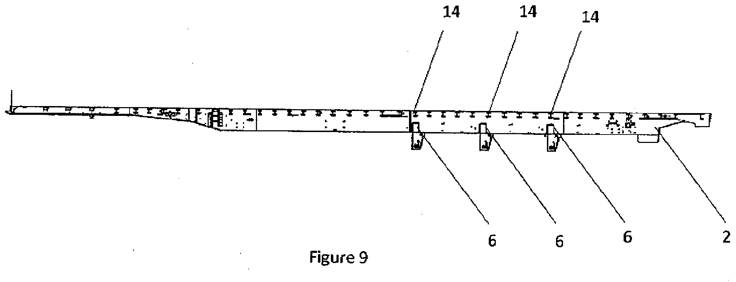

Figure 9 is a side view of an elongate structural support beam of a chassis having a plurality of reinforcing means thereon.

In the drawing, there is shown a chassis indicated generally by the reference numeral 1 comprising two spaced apart elongate structural support beams 2 spanning all or a substantial part of the length of the trailer. The two elongate structural support beams 2 being mechanically coupled by torsion boxes 3 spaced apart spanning between the elongate structural support beams 2 along the length of the elongate structural support beams 2. The torsion boxes 3 are configured to transfer load to the elongate structural support beams 2. The mechanical coupling joint between the torsion boxes 3 and a web 4 of the elongate structural support beams 2 is reinforced by wing gussets 5 surrounding the mechanical coupling joint. The chassis 1 further comprises reinforcing members 6 configured to reinforce the web 4 of the elongate structural support beams 2 of the chassis 1. The reinforcing members 6 being located on a mutually opposing portion of the web 4 of the elongate structural support beams 2 in engagement with the torsion boxes 3. The reinforcing members 6 extend less than the full heightwise distance between the bottom 7 and the top 8 of the elongate structural support beam 2. The reinforcing members 6 are on an outside surface 9 of the elongate structural support beam 2 with the wing gussets 5 and torsion boxes 3 located on an inside surface 10 of the elongate structural support beam 2. By inside we mean facing towards the center of the trailer and by outside we mean facing away from the trailer. In the embodiment shown in the drawings, the reinforcing members 6 extend from a bottom flange 11 of the elongate structural support beams 2 towards but not into contact with the upper flange 12 of the elongate structural support beams 2. In another embodiment not shown in the drawings, the reinforcing members 6 may extend from an upper flange 12 of the elongate structural support beams 2 towards but not into contact with the lower flange 11 of the elongate structural support beams 2. As the reinforcing members 6 do not extend the full heightwise distance between the bottom 7 and the top 8 of the elongate structural support beams 2, the remaining space 13 can have additional structural components such as floor beams 14 integrated therewith and leaving this remaining space 13 accessible for painting or other such finishing treatments that may be required.

The reinforcing members 6 are formed such that their thickness is significantly less than their lateral and longitudinal dimensions. The elongate structural support beams 2 are I-Beams comprising upper 12 and lower 11 flanges joined by a web portion 4. The reinforcing members 6 are attachable to the web 4 of the elongate structural support beams 2 such that the portion of the reinforcing members 6 defining the thickness dimension is abutting the web 4 of the elongate structural support beams 2. The reinforcing members 6 provide sufficient reinforcement of the web 4 whilst allowing installation space between the reinforcing members 6 and the top 12 or bottom 11 flange of the elongate structural support beams 2 so that other structural components such as floor beams 14 may be installed.

As the reinforcing members 6 are attachable to the web 4 of the elongate structural support beams 2 along their thickness, a minimal section of the web 4 of the elongate structural support beams 2 is covered by the reinforcing members 6 providing better access for painting, coating, treating, or any other activity which would benefit from greater access to a larger portion of the elongate structural support beams 2.

In the embodiment shown in the drawings, the reinforcing members 6 comprises two upright web attachment portions 15, 16 which extend from the lower flange 11 of the elongate structural support beams 2 towards but not into contact with the upper flange 12 of the elongate structural support beams 2. The two upright web attachment portions 15, 16 extend generally parallel to one another. The reinforcing members comprise a further web attachment portion 17 formed integrally with and extending between the two upright web attachment portions 15, 16. The further web attachment portion 17 provides additional stiffness to the reinforcing members 6 such that attachment to the upper flange 12 is not necessary, as is the case for many methods for reinforcing the web 4 of a beam 2. The further web attachment portion 17 extends between the two upright web attachment portions 15, 16 and substantially perpendicular to the two upright web attachment portions 15, 16 forming a generally inverted U or C shaped reinforcing member 6 having a flattened top portion formed by the further web attachment portion 17.

The reinforcing members 6 extend from one flange 11 of the elongate structural support beam 2 towards the other flange 12 of the elongate structural support beam 2 a distance allowing the placement of a floor crossbeam 14 through the web 4 of the elongate structural support beam 2 between the reinforcing members 6 and a flange 12 of the elongate structural support beam 2.

The reinforcing members 6 extend between 20% and 70% of the full heightwise distance between the bottom 7 and the top 8 of the elongate structural support beams 2. In the preferred embodiment as shown in the drawings, the reinforcing members 6 extend from the lower flange 11 of the elongate structural support beams 2 between 20% and 70% of the distance towards the upper flange 12 of the elongate structural support beams 2. In one embodiment not shown in the drawings, the reinforcing members 6 are adjustable such that they extend a portion of the heightwise distance between the bottom and the top flanges 11, 12 of the elongate structural support beam 2, this portion being determined by the characteristics of the trailer chassis or reinforcement requirements thereof.

The size of the reinforcing members 6 makes the optimization of the structural support features of the chassis 1 a lot easier as the positioning of cross members such as floor crossbeams 14 is in no way limited by the reinforcing members 6 spanning the full height of the web 4 of the elongate structural support beams 2. As all of the current structural load bearing analysis and stress analysis of chassis 1 for road going vehicles is done by virtual simulation and it is essential not to be limited to having portions along the length of the main elongate structural support beams 2 which are inaccessible for further enhancing of the overall structural integrity of the chassis 1, the present invention ensures that the full length of the elongate structural support beams 2 are available as locations for enhancing structural integrity.

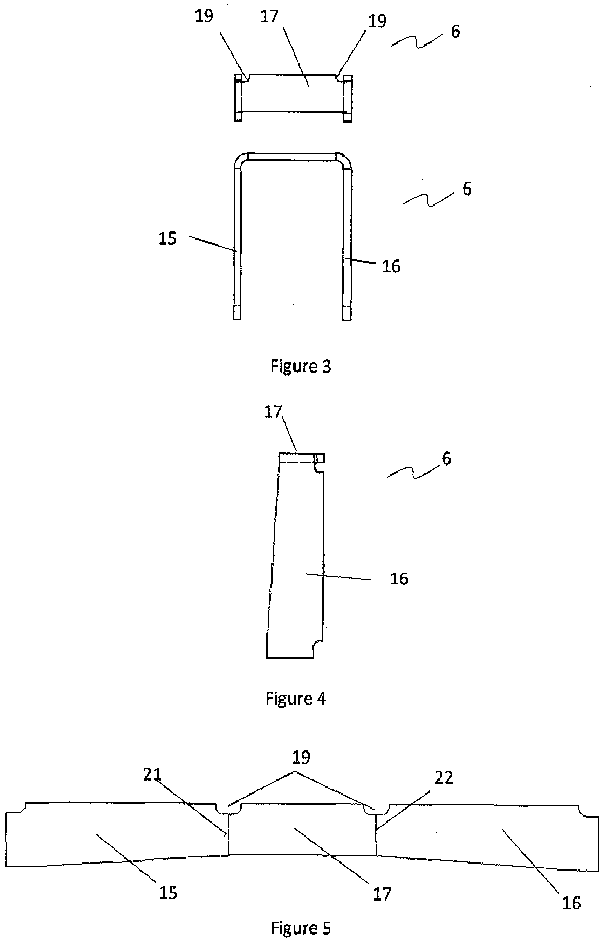

A radius 19 is provided between each upright web attachment portion 15, 16 and the further web attachment portion 17 of the reinforcing members 6. The reinforcing member is formed from a flat plate, see Figure 5, the thickness dimension of the reinforcing members being defined by the thickness of the flat plate used to form the reinforcing members 6. The reinforcing members 6 are formed from a single piece of material bent or otherwise formed into the shape of the reinforcing members 6.

The reinforcing members 6 are attached to the lower flange portion 11 and/or the web 4 of the elongate structural support beams 2 by welding and are located such that they supports and/or reinforces and/or stiffens the web 4 of the elongate structural support beam 2 at or about the location of a wing gusset 5 and/or torsion box 3 on the web 4 of the elongate structural support beam 2. In the particular embodiment as shown in the drawings, the reinforcing members 6 are locatable on the opposing planar surface of the web 4 of the elongate structural support beams 2 from that in contact with the wing gusset 5 and/or torsion box 3 and the shape of the reinforcing members are substantially similar to at least a portion of the cross-sectional shape of the torsion box 3. The elongate structural support beams 2 have a plurality of reinforcing members 6 locatable along their lengths at each position of a wing gusset 5 or torsion box 3.The reinforcing members 6 are manufactured from a metal or metal alloy and most preferably from steel.

Whilst the above detailed description focuses on reinforcing members 6 of a shape as shown in the embodiment shown in the drawings, it must be appreciated that this is illustrating just one example of execution of the invention and the reinforcing members 6 can comprise any shape which provides the necessary support and/or reinforcement whilst extending only a portion of the overall distance between the bottom 7 and the top 8 of the elongate structural support beams 2.

The present invention also provides a trailer bed (not shown) having a chassis 1 comprising two spaced apart elongate structural support beams 2 spanning all or a substantial part of the length of the trailer. The two elongate structural support beams 2 being mechanically coupled by torsion boxes 3 spaced apart spanning between the elongate structural support beams 2 along the length of the elongate structural support beams 2. The torsion boxes 3 are configured to transfer load to the elongate structural support beams 2. The mechanical coupling joint between the torsion boxes 3 and a web 4 of the elongate structural support beams 2 being reinforced by wing gussets 5 surrounding the mechanical coupling joint. The chassis 1 further comprises reinforcing members 6 configured to reinforce the web 4 of the elongate structural support beams 2 of the chassis 1. The reinforcing members 6 being located on a mutually opposing portion of the web 4 of the elongate structural support beams 2 in engagement with the torsion boxes 3. The reinforcing members 6 extend less than the full heightwise distance between the bottom 7 and the top 8 of the elongate structural support beam 2.

The present invention provides an undercarriage for a road going vehicle having a chassis 1 comprising two spaced apart elongate structural support beams 2 spanning all or a substantial part of the length of the trailer. The two elongate structural support beams 2 being mechanically coupled by torsion boxes 3 spaced apart spanning between the elongate structural support beams 2 along the length of the elongate structural support beams 2. The torsion boxes 3 are configured to transfer load to the elongate structural support beams 2. The mechanical coupling joint between the torsion boxes 3 and a web 4 of the elongate structural support beams 2 being reinforced by a wing gusset 5 surrounding the mechanical coupling joint. The chassis 1 further comprises reinforcing members 6 configured to reinforce the web 4 of the elongate structural support beams 2 of the chassis 1. The reinforcing members 6 being located on a mutually opposing portion of the web 4 of the elongate structural support beams 2 in engagement with the torsion boxes 3. The reinforcing members 6 extend less than the full heightwise distance between the bottom 7 and the top 8 of the elongate structural support beam 2.

In use, a method of manufacturing a chassis 1 for a trailer comprises the steps of providing two main chassis elongate structural support beams 2, coupling the two main elongate structural support beams 2 with torsion boxes 3 and reinforcing the joint therebetween with a wing gusset 5, reinforcing the main chassis elongate structural support beams 2 on an opposing surface 9 of the elongate structural support beams 2 to which the torsion box 3 is attached by providing a reinforcing member 6 along less than the full height of the elongate structural support beams 2. As the reinforcing members 6 do not extend the full height of the elongate structural support beams 2, the remaining gap 13 can have additional structural components such as floor cross beams 14 integrated therewith and makes this area 13 accessible for painting or other such finishing treatments that may be required. The method further comprising forming reinforcing members 6 by cutting, stamping, or otherwise forming a blank of material from a sheet or plate, see Figure 5 and bending the blank of material into the shape of the reinforcing members such that the reinforcing members 6 are shaped and/or sized so as to extend along less than the full height of the elongate structural support beams 2. More specifically, the method comprising bending the material blank in two locations 21, 22 such that two upright portions 15, 16 are formed and joined by a further web attachment portion 17 therebetween. The overall height of the reinforcing members 6 formed being such that it extends along less than the full height of the elongate structural support beams 2. The two bends 21, 22 formed in the blank are approximately 90 degree bends such that the two upright portions 15, 16 extend substantially perpendicular to the further web attachment portion 17 but parallel to each other. The method comprises welding the reinforcing members 6 to the web 4 of the elongate structural support beams 2 on an outside surface 9 of the web 4 of the elongate structural support beams 2 and opposing the wing gussets 5 and torsion boxes 3 such that the reinforcing members 6 extend along less than the full height of the elongate structural support beams 2. As the reinforcing members 6 do not encroach on the space utilised for additional structural components such as floor cross beams 14, manufacture and assembly of the chassis 1 is made easier by the increased level of access available and the ability to place additional structural components such as floor cross beams 14 without having to first consider the placement of reinforcing members 6.

In use, a reinforcing members 6 are formed which are sized in relation to the elongate structural support beams 2, wing gussets 5 and torsion boxes 3 at which the reinforcing members 6 are located. The reinforcing members 6 being sized to provide sufficient reinforcement whilst extending along less than the full height of the elongate structural support beams 2. The reinforcing members are welded to the lower flange 11 of the elongate structural support beams 2 at the bottom end of each of two upright web attachment portions 15, 16, and to the web along the thickness dimension of the upright web attachment portions and the further web attachment portion. The welded attachment being such that the reinforcing members 6 align with the wing gussets 5 and/or torsion boxes 3. Forces/loads/stresses which are generated by relative movement of portions of the chassis and counteracted by the wing gussets 5 and/or torsion boxes 3 are transferred via the wing gussets 5 and/or torsion boxes 3 into the web 4 of the elongate structural support beams 2, the web being reinforced by the reinforcing members 6 at or about the location of transfer of forces/loads/stresses between the wing gussets 5 and/or torsion boxes 3 and the web 4 of the elongate structural support beams 2.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A chassis (1) for a trailer comprising two spaced apart elongate structural support beams (2) spanning all or a substantial part of the length of the trailer, the two elongate structural support beams being mechanically coupled by spaced apart torsion boxes (3) spanning between the elongate structural support beams along the length of the elongate structural support beams, the torsion boxes being configured to transfer load to the elongate structural support beams, the mechanical coupling joint between the torsion boxes and a web (4) of the elongate structural support beams being reinforced by a wing gusset (5) surrounding the mechanical coupling joint, the chassis further comprising a reinforcing means (6) configured to reinforce the web of the elongate structural support beams of the chassis of the trailer, the reinforcing means being located on a mutually opposing portion of the web of the elongate structural support beams in engagement with the torsion boxes, wherein the reinforcing means extends less than the full heightwise distance between the bottom (7) and the top (8) of the elongate structural support beam **characterized in that** the reinforcing means comprises at least two upright web attachment portions (15, 16).

2. A chassis as claimed in claim 1, wherein the reinforcing means is on an outside surface (9) of the elongate structural support beam, the torsion box and wing gusset are on an inside surface (10) of the elongate structural support beam.

3. A chassis as claimed in claim 1 or claim 2, wherein the reinforcing means extends from a bottom flange member (11) of the elongate structural support beam towards but not into contact with an upper flange member (12) of the elongate structural support beam.

4. A chassis as claimed in any one of claims 1 or 2, wherein the reinforcing means extends from an upper flange member of the elongate structural support beam towards but not into contact with a bottom flange member of the elongate structural support beam.

5. A chassis as claimed in any one of the preceding claims, wherein the reinforcing means is formed such that it has a thickness which is significantly less than its lateral and longitudinal dimensions.

6. A chassis as claimed in any one of the preceding claims, wherein the reinforcing means is attachable to the web of the elongate structural support beam such that the portion of the reinforcing means defining the thickness dimension is abutting the web of the elongate structural support beam.

7. A chassis as claimed in claim 3 or any one of the claims 4 to 6 when dependent on claim 3, wherein the reinforcing means is attachable to a flange (11, 12) of the elongate structural support beam such that the portion of the reinforcing means defining the thickness dimension is abutting the flange of the elongate structural support beam.

8. A chassis as claimed in any preceding claim , wherein the upright web attachment portions extend from one flange of the elongate structural support beams towards but not into contact with the other flange of the elongate structural support beams.

9. A chassis as claimed in any one of the preceding claims, wherein the reinforcing means extends in a range of less than 70% to less than 20% of the full heightwise distance between the bottom and the top of the elongate structural support beams.

10. A chassis as claimed in claim 3 and any of claims 4 to 9 when dependent on claim 3, wherein the reinforcing means extends from the lower flange of the elongate structural support beams in a range of less than 70% to less than 20% of the distance towards the uppermost portion of the elongate structural support beams.

11. A chassis as claimed in any one of the preceding claims, wherein the reinforcing means is adjustable such that it extends a portion of the heightwise distance between the bottom and the top flanges of the elongate structural support beam, this portion being determined by the characteristics of the trailer chassis or reinforcement requirements thereof.

12. A chassis as claimed in any one of the preceding claims, wherein the height of the reinforcing means is approximately equal to or greater than the height of the torsion box.

13. A chassis as claimed in claim 3 and any of claims 4 to 12 when dependent on claim 3, wherein the reinforcing means extends from one flange of the elongate structural support beam towards the other flange of the elongate structural support beam a distance allowing the placement of a torsion box on the web of the elongate structural support beam between the reinforcing means and a flange of the elongate structural support beam.

14. A chassis as claimed in any one of the preceding claims , wherein the two upright web attachment portions are attachable to the lower flange of the beam.

15. A chassis as claimed in any one of the preceding claims, wherein the reinforcing means is formed from a single piece of material bent or otherwise formed into the shape of the reinforcing means.

16. A method of manufacturing a chassis (1) for a trailer comprising the steps of providing two main chassis elongate structural support beams (2), coupling the two main elongate structural support beams with torsion boxes (3) and reinforcing the joint there between with wing gussets (5), reinforcing the main chassis elongate structural support beams on an opposing surface of the elongate structural support beams to which the torsion box is attached by providing a reinforcing means (6) along less than the full height of the elongate structural support beams the method being **characterized by** providing the reinforcing means with at least two upright web attachment portions (15, 16).

## Patentansprüche

1. Fahrgestell für einen Anhänger (1), umfassend zwei beabstandete längliche strukturelle Stützträger (2), welche über die gesamte oder einen wesentlichen Teil der Länge des Anhängers reichen, wobei die beiden länglichen strukturellen Stützträger durch beabstandete Torsionskästen (3), die zwischen den länglichen strukturellen Stützträgern entlang der länglichen strukturellen Stützträger reichen, mechanisch gekoppelt sind, wobei die Torsionskästen dazu ausgelegt sind, Last auf die länglichen strukturellen Stützträger zu übertragen, wobei die mechanische Kupplungsverbindung zwischen den Torsionskästen und einem Steg (4) der länglichen strukturellen Stützträger durch eine Flügel-Eckversteifung (5), welche die mechanische Kupplungsverbindung umgibt, verstärkt wird, wobei das Fahrgestell ferner ein Verstärkungsmittel (6) umfasst, das dazu ausgelegt ist, den Steg der länglichen strukturellen Stützträger des Fahrgestells des Anhängers zu verstärken, wobei das Verstärkungsmittel auf einander gegenüberliegenden Abschnitten des Stegs der länglichen strukturellen Stützträger im Eingriff mit den Torsionskästen angeordnet ist, wobei sich das Verstärkungsmittel in weniger als dem gesamten Abstand in Höhenrichtung zwischen der Unterseite (7) und der Oberseite (8) des länglichen strukturellen Stützträgers erstreckt, **dadurch gekennzeichnet, dass** das Verstärkungsmittel mindestens zwei senkrechte Stegbefestigungsabschnitte (15,16) umfasst.

2. Fahrgestell nach Anspruch 1, wobei das Verstärkungsmittel an einer Außenfläche (9) des länglichen strukturellen Stützträgers liegt und der Torsionskasten und die Flügel-Eckversteifung an einer Innenfläche (10) des länglichen Strukturelle Stützträgers liegen.

3. Fahrgestell nach Anspruch 1 oder Anspruch 2, wobei sich das Verstärkungsmittel von einem unteren Flanschelement (11) des länglichen strukturellen Stützträgers hin zu, aber nicht in Berührung mit einem oberen Flanschelement (12) des länglichen strukturellen Stützträgers erstreckt.

4. Fahrgestell nach einem der Ansprüche 1 oder 2, wobei sich das Verstärkungsmittel von einem oberen Flanschelement des länglichen strukturellen Stützträgers hin zu, aber nicht in Berührung mit einem unteren Flanschelement des länglichen strukturellen Stützträgers erstreckt.

5. Fahrgestell nach einem der vorhergehenden Ansprüche, wobei das Verstärkungsmittel derart ausgebildet ist, dass es eine Dicke aufweist, die wesentlich kleiner ist als seine Quer- und Längsabmessungen.

6. Fahrgestell nach einem der vorhergehenden Ansprüche, wobei das Verstärkungsmittel an dem Steg des länglichen strukturellen Stützträgers derart befestigbar ist, dass der Abschnitt des Verstärkungsmittels, der die Dickenabmessung definiert, an dem Steg des länglichen strukturellen Stützträgers anliegt.

7. Fahrgestell nach Anspruch 3 oder bei Abhängigkeit von Anspruch 3 nach einem der Ansprüche 4 bis 6, wobei das Verstärkungsmittel an einen Flansch (11, 12) des länglichen strukturellen Stützträgers derart befestigbar ist, dass der Abschnitt des Verstärkungsmittels, der die Dickenabmessung definiert, am Flansch des länglichen strukturellen Stützträgers anliegt.

8. Fahrgestell nach einem vorhergehenden Anspruch, wobei sich die senkrechten Stegbefestigungsabschnitte von einem Flansch des länglichen strukturellen Stützträgers hin zu, aber nicht in Berührung mit dem anderen Flansch des länglichen strukturellen Stützträgers erstrecken.

9. Fahrgestell nach einem der vorhergehenden Ansprüche, wobei sich das Verstärkungsmittel in einem Bereich von weniger als 70 % bis weniger als 20 % des vollen Abstands in Höhenrichtung zwischen der Unterseite und der Oberseite der länglichen strukturellen Stützträger erstreckt.

10. Fahrgestell nach Anspruch 3 und bei Abhängigkeit von Anspruch 3 nach einem der Ansprüche 4 bis 9, wobei sich das Verstärkungsmittel von dem unteren Flansch der länglichen strukturellen Stützträger in einem Bereich von weniger als 70 % bis weniger als 20 % des Abstands hin zum obersten Abschnitt der länglichen strukturellen Stützträger erstreckt.

11. Fahrgestell nach einem der vorhergehenden Ansprüche, wobei das Verstärkungsmittel derart einstellbar ist, dass es sich zu einem Abschnitt des Abstands in Höhenrichtung zwischen dem unteren und dem Flansch des länglichen strukturellen Stützträgers erstreckt, wobei dieser Abstand durch die Merkmale des Anhängerfahrgestells oder dessen Verstärkungserfordernisse bestimmt wird.

12. Fahrgestell nach einem der vorhergehenden Ansprüche, wobei die Höhe des Verstärkungsmittels annähernd gleich oder größer als die Höhe des Torsionskastens ist.

13. Fahrgestell nach Anspruch 3 und bei Abhängigkeit von Anspruch 3 nach einem der Ansprüche 4 bis 12, wobei sich das Verstärkungsmittel von einem Flansch des länglichen strukturellen Stützträgers hin zu dem anderen Flansch des länglichen strukturellen Stützträgers in einem Abstand erstreckt, der die Anordnung eines Torsionskastens an dem Steg des länglichen strukturellen Stützträgers zwischen dem Verstärkungsmittel und einem Flansch des länglichen strukturellen Stützträgers gestattet.

14. Fahrgestell nach einem der vorhergehenden Ansprüche, wobei die beiden senkrechten Stegbefestigungsabschnitte an dem unteren Flansch des Trägers anbringbar sind.

15. Fahrgestell nach einem der vorhergehenden Ansprüche, wobei das Verstärkungsmittel aus einem einzelnen Stück Material ausgebildet ist, das gebogen oder anderweitig in die Form des Verstärkungsmittels gebracht wird.

16. Verfahren zur Herstellung eines Fahrgestells (1) für einen Anhänger, umfassend die Schritte des Bereitstellens von zwei länglichen strukturellen Hauptstützträgern (2) für das Fahrgestell, welche die zwei länglichen strukturellen Hauptstützträger mit Torsionskästen (3) kuppeln und die Kupplung dazwischen mit Flügel-Eckversteifungen (5) verstärken, wobei die länglichen strukturellen Hauptstützträger für das Fahrgestell an einer gegenüberliegenden Fläche der länglichen strukturellen Stützträger, an denen der Torsionskasten befestigt ist, durch Bereitstellen eines Verstärkungsmittels (6) entlang von weniger als der vollen Höhe der länglichen strukturellen Stützträger verstärkt werden, wobei das Verfahren **dadurch gekennzeichnet ist, dass** die Verstärkungsmittel mit mindestens zwei senkrechten Stegbefestigungsabschnitten (15, 16) bereitgestellt sind.

## Revendications

1. Châssis (1) de remorque comprenant deux poutres de support structurelles allongées (2) espacées l'une de l'autre et s'étendant sur la totalité ou sur une partie substantielle de la longueur de la remorque, les deux poutres de support structurelles allongées étant couplées mécaniquement par des boîtes de torsion (3) espacées l'une de l'autre, qui couvrent la longueur des poutres de support structurelles allongées, les boîtes de torsion étant conçues pour transférer une charge aux poutres de support structurelles allongées, la liaison mécanique entre les boîtes de torsion et une âme (4) des poutres de support structurelles allongées étant renforcée par un soufflet (5) entourant le raccord mécanique de raccordement, le châssis comprenant en outre un moyen de renforcement (6) configuré pour renforcer l'âme des poutres de support structurelles allongées du châssis de remorque, le moyen de renforcement étant situé sur une partie mutuellement opposée de l'âme des poutres de support structurelles allongées en engagement avec les boîtes de torsion, le moyen de renforcement s'étendant moins que la distance en hauteur totale entre la partie inférieure (7) et la partie supérieure (8) de la poutre de support structurelle allongée, **caractérisé en ce que** le moyen de renforcement comprend au moins deux parties verticales (15, 16) de fixation à l'âme en hauteur.

2. Châssis selon la revendication 1, dans lequel le moyen de renforcement se trouve sur une surface extérieure (9) de la poutre de support structurelle allongée, la boîte de torsion et le soufflet latéral étant sur une surface intérieure (10) de la poutre de support structurelle allongée.

3. Châssis selon la revendication 1 ou la revendication 2, dans lequel le moyen de renforcement s'étend depuis un élément de bride inférieur (11) de la poutre de support structurelle allongée vers un élément de bride supérieur (12) de la poutre de support structurelle allongée, sans entrer en contact avec celui-ci.

4. Châssis selon l'une quelconque des revendications 1 ou 2, dans lequel le moyen de renforcement s'étend d'un élément de bride supérieur de la poutre de support structurelle allongée vers un élément de bride inférieur de la poutre de support structurelle allongée, sans être en contact avec celui-ci.

5. Châssis selon l'une quelconque des revendications précédentes, dans lequel le moyen de renforcement est formé de telle sorte qu'il ait une épaisseur qui est sensiblement inférieure à ses dimensions latérales et longitudinales.

6. Châssis selon l'une quelconque des revendications précédentes, dans lequel le moyen de renforcement peut être fixé à l'âme de la poutre de support structurelle allongée de telle sorte que la partie du moyen de renforcement définissant la dimension d'épaisseur est en butée contre l'âme de la poutre de support structurelle allongée.

7. Châssis selon la revendication 3 ou l'une quelconque des revendications 4 à 6 lorsqu'elles dépendent de la revendication 3, dans lequel le moyen de renforcement peut être fixé à une bride (11, 12) de la poutre de support structurelle allongée de sorte que la partie du moyen de renforcement définissant la dimension d'épaisseur est en butée contre la bride de la poutre de support structurelle allongée.

8. Châssis selon l'une quelconque des revendications précédentes, dans lequel les parties verticales de fixation de l'âme s'étendent à partir d'une bride des poutres de support structurelles allongées vers l'autre bride des poutres de support structurelles allongées, sans être en contact avec celle-ci.

9. Châssis selon l'une quelconque des revendications précédentes, dans lequel le moyen de renforcement s'étend dans une plage de moins de 70% à moins de 20% de la distance en hauteur totale entre la partie inférieure et la partie supérieure des poutres de support structurelles allongées.

10. Châssis selon la revendication 3 et l'une quelconque des revendications 4 à 9 lorsqu'elles dépendent de la revendication 3, dans lequel le moyen de renforcement s'étend depuis le bride inférieure des poutres de support structurelles allongées dans une plage de moins de 70% à moins de 20% de la distance à la partie supérieure des poutres de support structurelles allongées.

11. Châssis selon l'une quelconque des revendications précédentes, dans lequel le moyen de renforcement est réglable de telle sorte qu'il s'étend sur une partie de la distance en hauteur entre les brides inférieure et supérieure de la poutre de support structurelle allongée, cette partie étant déterminée par les caractéristiques du châssis de remorque ou ses exigences de renforcement.

12. Châssis selon l'une quelconque des revendications précédentes, dans lequel la hauteur du moyen de renforcement est approximativement égale ou supérieure à la hauteur de la boîte de torsion.

13. Châssis selon la revendication 3 et l'une quelconque des revendications 4 à 12 lorsqu'elles dépendent de la revendication 3, dans lequel le moyen de renforcement s'étend d'une bride de la poutre de support structurelle allongée vers l'autre bride de la poutre de support structurelle allongée sur une distance permettant le placement d'une boîte de torsion sur l'âme de la poutre de support structurelle allongée entre le moyen de renforcement et une bride de la poutre de support structurelle allongée.

14. Châssis selon l'une quelconque des revendications précédentes, dans lequel les deux parties verticales de fixation à l'âme peuvent être fixées à la bride inférieure de la poutre.

15. Châssis selon l'une quelconque des revendications précédentes, dans lequel le moyen de renforcement est formé à partir d'une seule pièce de matériau pliée ou autrement formée sous la forme du moyen de renforcement.

16. Procédé de fabrication d'un châssis (1) de remorque comprenant les étapes consistant à fournir deux poutres principales de support structurelles allongées de châssis (2), coupler les deux poutres principales de support structurelles allongées avec des boîtes de torsion (3) et renforcer le raccord entre celles-ci avec des soufflets latéraux (5), renforcer les poutres principales de support structurelles allongées de châssis sur une surface opposée des poutres de support structurelles allongées auxquelles est fixée la boîte de torsion en fournissant un moyen de renforcement (6) sur moins que la hauteur totale des poutres de support structurelles allongées, le procédé étant **caractérisé en ce qu'**il fournit au moins deux parties verticales de fixation à l'âme (15, 16) .
